# EUROPÄISCHE PATENTSCHRIFT

(11) **EP 4 486 542 B1**
(45) Veröffentlichungstag und Bekanntmachung des Hinweises auf die Patenterteilung: **31.12.2025**
(21) Anmeldenummer: 22709686.4
(22) Anmeldetag: 01.03.2022
(51) Int. Cl.: B25J 9/00

(54) **VORRICHTUNG UND SYSTEM ZUR ERZEUGUNG ODER UNTERSTÜTZUNG EINER RELATIVBEWEGUNG ZWISCHEN ÜBER EINE GELENKARTIGE STRUKTUR MITEINANDER VERBUNDENEN KÖRPERTEILEN**
DEVICE AND SYSTEM FOR GENERATING OR ASSISTING A RELATIVE MOVEMENT BETWEEN BODY PARTS CONNECTED TO ONE OTHER VIA AN ARTICULATED STRUCTURE
DISPOSITIF ET SYSTÈME DE GÉNÉRATION OU D'ACCOMPAGNEMENT D'UN MOUVEMENT RELATIF ENTRE DES PARTIES CORPORELLES RELIÉES L'UNE À L'AUTRE PAR L'INTERMÉDIAIRE D'UNE STRUCTURE ARTICULÉE

(43) Veröffentlichungstag der Anmeldung: 08.01.2025
(73) Patentinhaber: Pierburg GmbH, 41460 Neuss (DE)
(72) Erfinder: STRACKE, Felix, 41460 Neuss (DE); CARRACELAS, Javier, 41460 Neuss (DE); SCHÜLLER, Mira, 41460 Neuss (DE); STAPELS, Tobias, 41460 Neuss (DE)
(74) Vertreter: terpatent PartGmbB
(86) Internationale Anmeldenummer: PCT/EP2022/055050
(87) Internationale Veröffentlichungsnummer: WO 2023/165673

(56) Entgegenhaltungen:
- US-A1- 2014 277 739

## Beschreibung

Die Erfindung betrifft eine Vorrichtung zur Erzeugung oder Unterstützung einer Relativbewegung zwischen zwei über eine gelenkartige Struktur miteinander verbundenen Körperteilen mit einer ersten Lastaufnahmestruktur, welche an einem ersten Körperteil befestigt ist, einer zweiten Lastaufnahmestruktur, welche an einem zweiten Körperteil befestigt ist, welches relativ zum ersten Körperteil über die gelenkartige Struktur schwenkbar ist, und einem Aktor, über den die erste Lastaufnahmestruktur mit der zweiten Lastaufnahmestruktur verbunden ist, sowie ein System zur Erzeugung oder Unterstützung einer Mehrzahl an Relativbewegungen zwischen über eine gelenkartige Struktur miteinander verbundenen Körperteilen mit mehreren derartigen Vorrichtungen.

Derartige Vorrichtungen dienen dazu, eine sonst allein durch Muskelkraft erzeugte Bewegung am Körper eines Menschen von außen zu erzeugen oder zu unterstützen. Bei Verwendung mehrerer solcher Vorrichtungen werden diese üblicherweise unter dem Begriff Exosuit oder Exoskelett zusammengefasst.

Die Gründe für die Entwicklung solcher Anzüge sind vielfältig. Neben der Reduzierung der Wahrscheinlichkeit eines Arbeitsausfalls, der zu über 20% auf Erkrankungen des Muskel- und Skelettsystems zurückzuführen ist, können solche Vorrichtungen und Systeme auch genutzt werden, um die körperliche Leistungsfähigkeit und Produktivität zu erhöhen, und gleichzeitig den Körper bei schweren körperlichen Arbeiten zu entlasten. Auch für verletzte oder alte Personen oder Personen mit fehlenden Gliedmaßen kann dies, gegebenenfalls bei gleichzeitiger Verwendung entsprechender Prothetik, den Lebensstandard wieder deutlich erhöhen.

Entsprechend sind verschiedene Exoskelette entwickelt worden. Diese weisen üblicherweise starre, feste und schwere Stützstrukturen auf, die über einen Elektromotor betätigt werden können, um eine Bewegung zu erzeugen. Aufgrund dieses Problems wurde in den letzten Jahren versucht weichere Strukturen zu verwenden, die sich besser an den Körper anpassen, jedoch werden dabei weiterhin zumeist elektromagnetische Aktoren verwendet, die beispielsweise über Bowdenzüge eine Bewegung verursachen.

Aus US 2014 0277 739 A1 ist ein Exosuit bekannt, das als Aktoren elektroaktive Polymeraktoren aufweist, die bei Anlegen einer elektrischen Spannung kontrahieren.

In der US 2018/0056104 A1 wird ein Exosuit vorgeschlagen, bei dem eine Vielzahl von elastischen Bändern die Gliedmaßen umgeben und so einen Anzug bilden, während die Betätigung über einen flexiblen Linearaktor erfolgt, der einen Elektromotor aufweist, welcher gedrillte Saiten betätigt, um die Länge der Saiten zu verändern und so eine Relativbewegung der beiden mit dem Aktor gekoppelten Körperglieder zu erzeugen. Ein solcher Anzug und auch die aktuierenden Saiten sind zwar deutlich flexibler als die bislang bekannten starren Anzüge, jedoch bleibt mit dem Aktor ein starres Bauteil vorhanden, so dass eine Person, die einen solchen Anzug trägt, weiter in ihrer Bewegung eingeschränkt ist.

Entsprechend bestehen bei den bekannten Ausführungen die Nachteile, dass der Träger bei seinen definierten Bewegungen zwar unterstützt wird, jedoch eine freie Beweglichkeit, wie bei normalen Kleidungsstücken oder einer Art zweiter Haut, nicht gegeben ist.

Es stellt sich daher die Aufgabe, eine Vorrichtung und ein System zur Erzeugung oder Unterstützung einer Relativbewegung zwischen über eine gelenkartige Struktur miteinander verbundenen Körperteilen zu schaffen, welche den Träger möglichst ohne Einschränkungen unterstützt. Entsprechend soll ein weiches Exoskelett geschaffen werden, dessen Leistungsdaten denen der menschlichen Muskulatur ähneln und welches möglichst kostengünstig hergestellt werden kann. Zusätzlich sollen die Verletzungsgefahr und die Bewegungseinschränkungen reduziert werden und Druckstellen beim Tragen vermieden werden.

Diese Aufgabe wird durch eine Vorrichtung zur Erzeugung oder Unterstützung einer Relativbewegung zwischen zwei Körperteilen gelöst, die über eine gelenkartige Struktur miteinander verbunden sind. Die gelenkartige Struktur kann dabei sowohl durch ein auch als solches im Sprachgebrauch bezeichnetes Gelenk, wie ein Schultergelenk oder Kniegelenk, aber auch durch die Wirbelsäule gebildet werden, über die beispielsweise der Kopf relativ zum Torso oder der Torso relativ zur Hüfte bewegt werden können. Entsprechend werden unter Körperteilen nicht nur die Extremitäten, sondern auch Brustkorb, Kopf oder Gesäß aber auch Füße, Zehen, Hände und Finger verstanden. Die Vorrichtung weist eine erste Lastaufnahmestruktur auf, welche an einem ersten Körperteil befestigt ist. Dabei wird unter einer Lastaufnahmestruktur eine Struktur verstanden, welche eine über einen Aktor erzeugte Last aufnehmen und an das Körperteil, an dem es befestigt ist, übertragen kann. Bei der Verwendung am Menschen kann eine großflächige Kraftverteilung zur Vermeidung von zu stark belasteten Druck- und Reibflächen sinnvoll sein. Entsprechend muss eine beliebig geartete Verbindung zum Aktor direkt oder indirekt vorliegen und eine entsprechende Befestigung an einem Körperteil. Unter indirekter Verbindung wird dabei eine Verbindung verstanden, die nicht unmittelbar zwischen den beiden genannten Bauteilen oder Körperteilen erfolgt, sondern unter Zwischenschaltung eines weiteren Bauteils. Des Weiteren weist die erfindungsgemäße Vorrichtung eine zweite Lastaufnahmestruktur auf, welche an einem zweiten Körperteil befestigt ist, das relativ zum ersten Körperteil geschwenkt werden kann, wie beispielsweise der Oberschenkel zum Unterschenkel oder die Brust zur Hüfe geschwenkt werden kann. Zusätzlich weist die Vorrichtung einen Aktor auf, über den die erste Lastaufnahmestruktur mit der zweiten Lastaufnahmestruktur direkt oder indirekt verbunden ist. Dieser Aktor ist erfindungsgemäß ein elektrostatischer, linearer Filmaktor. Der Aktor ist somit zwischen den beiden Lastaufnahmestrukturen angeordnet, so dass bei Betätigung des Filmaktors das eine Körperteil relativ zum anderen bewegt wird. Ein solcher Filmaktor besteht üblicherweise aus zwei oder mehreren Schichten, in denen jeweils eine Reihe leitender Elektroden, die als leitende Platten oder Kämme ausgebildet sind, angeordnet sind, die durch einen elektrischen Isolator, der durch ein angelegtes elektrisches Feld polarisiert werden kann, getrennt sind. Die Betätigung beruht auf der Kraft zwischen den beiden leitenden Elektroden, wenn eine Spannung zwischen ihnen angelegt wird. Durch die Anordnung der Elektroden in Reihen hintereinander kann eine lineare Bewegung der beiden Schichten zueinander erzeugt werden, indem eine fortlaufende Spannungswelle in den Elektroden der ersten Schicht erzeugt wird, wodurch anziehende und/oder abstoßende Kräfte an der zweiten Schicht entstehen, die durch entsprechendes wellenförmiges Fortschreiten der Spannung in der ersten Schicht zu einer translatorischen Bewegung der zweiten Schicht führen. Beispielsweise durch die Verwendung mehrerer übereinander angeordneter Schichten, von denen jede zweite Schicht in gleicher Weise ausgebildet und bestromt wird, kann die Kraft eines solchen Aktors erhöht werden. Ein solcher Filmaktor ist flexibel biegbar und passt sich entsprechend bei Bewegung dem Körper an.

Dies führt zu einem deutlich erhöhten Tragekomfort. Auch kann ein solcher Filmaktor in beide Richtungen eine gleich große Kraft erzeugen, so dass Bewegungen in beiden Richtungen, also zum Beugen und zum Strecken erzeugt werden können. Diese Filmaktoren weisen eine hohe Leistungsdichte auf und sind bezüglich der geforderten Kraft einstellbar und sehr exakt steuerbar. Selbstverständlich kann die Vorrichtung auch eine dritte Lastaufnahmestruktur aufweisen, die mit dem Aktor zumindest indirekt verbunden ist. Eine solche zusätzliche Struktur kann entweder zur zusätzlichen Befestigung oder zur Einleitung der Kraft in ein drittes über ein weiteres Gelenk verbundenes Körperteil genutzt werden. Dies kann zum Beispiel bei der Aktuierung eines Fingers sinnvoll sein.

Die gestellte Aufgabe wird auch durch ein System zur Erzeugung oder Unterstützung einer Mehrzahl an Relativbewegungen zwischen über eine gelenkartige Struktur miteinander verbundenen Körperteilen mit mehreren derartigen Vorrichtungen gelöst. Dabei weist das System eine Hüft-Lastaufnahmestruktur auf, die an der Taille oder Hüfte angeordnet ist, und an der zwei elektrostatische Filmaktoren befestigt sind. Ein erster dieser Oberschenkelbewegungs-Filmaktoren ist mit seinem von der Hüft-Lastaufnahmestruktur abgewandten Ende an einer ersten Oberschenkel-Lastaufnahmestruktur am ersten Oberschenkel befestigt ist, und ein zweiter Oberschenkelbewegungs-Filmaktor ist mit seinem von der Hüft-Lastaufnahmestruktur abgewandten Ende an einer zweiten Oberschenkel-Lastaufnahmestruktur am zweiten Oberschenkel befestigt. Somit kann bei entsprechender Ansteuerung ein entsprechendes Anheben und Absetzen der Beine unterstützt oder erzeugt werden. Der Aktor mit den Lastaufnahmestrukturen kann vollständig flexibel beziehungsweise elastisch ausgeführt werden, so dass sich das System an den Körper anschmiegen kann und dennoch eine Bewegung des Unterkörpers ermöglicht.

Des Weiteren kann entweder ergänzend hierzu oder unabhängig davon eine Torso-Lastaufnahmestruktur in Brusthöhe am Torso befestigt sein, an der zwei elektrostatische Filmaktoren befestigt sind, von denen ein erster Oberarmbewegungs-Filmaktor mit seinem von der Torso-Lastaufnahmestruktur abgewandten Ende an einer ersten Oberarm-Lastaufnahmestruktur am ersten Oberarm befestigt ist, und ein zweiter Oberarmbewegungs-Filmaktor mit seinem von der Torso-Lastaufnahmestruktur abgewandten Ende an einer zweiten Oberarm-Lastaufnahmestruktur am zweiten Oberarm befestigt ist. Entsprechend wird eine Bewegung der Arme um das Schultergelenk unterstützt beziehungsweise durchgeführt. Auch dieses System ist voll flexibel und passt sich entsprechend an den Körper des Trägers an.

In beiden Fällen besteht keine Bewegungsbeschränkung für den Träger. Auch Druckstellen werden durch die Flexibilität vollständig vermieden.

Der Filmaktor weist vorzugsweise einen Stator auf, der mit einer der beiden Lastaufnahmestrukturen zumindest indirekt verbunden ist und ein Gleitelement auf, welches mit dem anderen der beiden Lastaufnahmestrukturen zumindest indirekt verbunden ist. Der Stator befindet sich in einem festen Abstand zu einer der Lastaufnahmestrukturen. Gleiches gilt für das Gleitelement, welches sich ebenfalls in einem festen Abstand zu der zweiten Lastaufnahmestruktur befindet. Durch die Bestromung gleitet das Gleitelement translatorisch entlang der Oberfläche des Stators, wodurch der Abstand zwischen den beiden Lastaufnahmestrukturen verkürzt, beziehungsweise verlängert wird. Hierdurch entsteht eine Schwenkbewegung um das zwischen den Lastaufnahmestrukturen angeordnete Gelenk.

Vorteilhafterweise sind im Stator des Filmaktors erste Elektroden ausgebildet und im Gleitelement des Filmaktors zweite Elektroden ausgebildet, wobei die ersten Elektroden und die zweiten Elektroden mit unterschiedlichen Mehrphasenwechselspannungen aus einer Steuerungselektronik, die mit einem Energiespeicher verbunden ist, beaufschlagbar sind. Durch diese Beaufschlagung entstehen zwischen den ersten Elektroden und den zweiten Elektroden und damit zwischen dem Stator und dem Gleitelement abstoßende und/oder anziehende Kräfte, durch welche bei korrekter Ansteuerung die lineare, translatorische Bewegung des Gleitelementes entlang der Statoroberfläche erzeugt wird. Die Stellgeschwindigkeit ist sehr hoch. Auch besteht eine gute und sehr genaue Regelbarkeit. Durch die sich bewegenden Elemente entstehende Verletzungen sind weitestgehend ausgeschlossen, da das Gleitelement direkt auf dem Stator gleitet, so dass ein Klemmen zwischen sich bewegenden und statischen Teilen vermieden wird.

Vorzugsweise ist die erste Lastaufnahmestruktur am nicht zu bewegenden ersten Körperteil angeordnet und die zweite Lastaufnahmestruktur am relativ zum ersten Körperteil zu bewegenden zweiten Körperteil angeordnet, wobei ein Abstand der einen Lastaufnahmestruktur zu einer gelenkartigen Struktur zwischen den beiden Körperteilen kleiner ist als der Abstand der anderen Lastaufnahmestruktur zur gelenkartigen Struktur zwischen den beiden Körperteilen. Somit verbleibt der Aktor immer außerhalb der gelenkartigen Struktur und liegt immer nah an einem der beiden Körperteile an, wodurch der Tragekomfort deutlich erhöht wird.

In einer weiteren vorteilhaften Ausgestaltung der Erfindung ist das Gleitelement des elektrostatischen Filmaktors mit der zweiten Lastaufnahmestruktur zumindest indirekt verbunden und der Stator des elektrostatischen Filmaktors ist mit der ersten Lastaufnahmestruktur zumindest indirekt verbunden. Entsprechend wird die Bewegung des Gleitelementes auch direkt an das zu bewegende Körperteil übertragen.

Vorzugsweise sind der Stator und das Gleitelement zwischen der gelenkartigen Struktur und einer der Lastaufnahmestrukturen angeordnet, wodurch der gesamte Filmaktor auf einem festen Körperteil aufliegt. Eine Störung der Bewegung des Aktors durch die sich bildende Beugung wird auf diese Weise zuverlässig vermieden. Stattdessen ist der Aktor so in einer Umgebung angeordnet, in der üblicherweise eine weiterstgehend glatte Oberfläche zur Verfügung steht.

Der Stator liegt vorzugsweise an der Seite des jeweiligen Körperteils auf, zu der die Bewegung des zweiten Körperteils bei der Beugung erfolgt. Entsprechend erfolgt eine Zugbewegung durch den Filmaktor, welche deutlich einfacher auch über teilweise flexible Bänder übertragen werden kann, während die Streckbewegung üblicherweise durch die Gravitationskraft unterstützt wird.

Vorzugsweise sind die Lastaufnahmestrukturen flexibel und einstellbar. Somit weisen sie einerseits einen hohen Tragekomfort auf und können andererseits an den jeweils Tragenden angepasst werden, so dass ein optimaler Sitz hergestellt werden kann. Die Einstellbarkeit kann dabei sowohl automatisch durch elastische Materialien erfolgen als auch durch entsprechende Befestigungsstrukturen wie beispielsweise Klettverschlüsse.

In einer hierzu weiterführenden Ausführung weisen die Lastaufnahmestrukturen textile Bänder auf. Diese weisen einen hohen Tragekomfort auf, können elastisch ausgebildet werden und sind kostengünstig herstellbar. Jede Lastaufnahmestruktur kann dabei ein oder mehrere Bänder aufweisen.

In einer besonders bevorzugten Ausführungsform sind mehrere elektrostatische, lineare Filmaktoren mit den beiden Lastaufnahmestrukturen verbunden. Die Filmaktoren sind dabei parallel zueinander geschaltet. Dies kann für verschiedene Zwecke genutzt werden. So kann die notwendige Kraft zur Erzeugung der Bewegung einfach nur aufgeteilt werden oder es können in unterschiedliche Richtungen wirkende Kräfte erzeugt werden, wenn die Filmaktoren über den Umfang der Lastaufnahmestrukturen verteilt werden. Dann können einerseits gegenläufige Bewegungen durch Zugkräfte aktuiert werden, wie dies bei der menschlichen Muskulatur der Antagonist tut und andererseits bei Gelenken, die Bewegungen in unterschiedliche Richtungen zulassen, wie beispielsweise das Schultergelenk dies tut, kann auch bei diesem Beispiel die Bewegung des Oberarms je nach Ansteuerung des jeweiligen Aktors in verschiedene Richtungen gesteuert werden, also beispielsweise einem Heben des Oberarms nach außen, nach vorne oder nach hinten.

In einer vorteilhaften Weiterbildung des Systems zur Erzeugung oder Unterstützung einer Mehrzahl an Relativbewegungen ist die Torso-Lastaufnahmestruktur über einen Rückenbewegungs-Filmaktor mit der Hüft-Lastaufnahmestruktur verbunden. Somit wird ein Gesamtkörperanzug geschaffen, über den neben den Extremitäten auch der Rumpf bewegt oder unterstützt werden kann.

Vorzugsweise sind an der Hüft-Lastaufnahmestruktur ein Energiespeicher und eine Steuerungselektronik ausgebildet. In diesem Bereich sind der Energiespeicher und die Elektronik üblicherweise nicht störend oder bewegungseinschränkend und dennoch gut erreichbar.

Der Rückenbewegungs-Filmaktor ist vorteilhafterweise am Rücken zwischen der Torso-Lastaufnahmestruktur und der Hüft-Lastaufnahmestruktur angeordnet, wodurch der Bauchbereich freibleiben kann, so dass auch hier der Bewegungsraum der Arme und Beine nicht eingeschränkt wird. Vor allem kann auf diese Weise aus einer gebeugten Haltung erneut durch eine Zugbewegung das Aufrichten des Oberkörpers erzeugt oder unterstützt werden. Um ein Verschieben der Hüft-Lastaufnahmestruktur zu vermeiden, können selbstverständlich auch zusätzliche Beingurte vorgesehen werden, die mit der Hüftlastaufnahmestruktur fest verbunden sind.

Vorzugsweise weist die Oberschenkel-Lastaufnahmestruktur ein erstes Band am Oberschenkel oberhalb des Knies und ein zweites Band am Unterschenkel unterhalb des Knies auf, die miteinander verbunden sind, wobei die Oberschenkelbewegungs-Filmaktoren auf den Oberschenkeln aufliegen. So wird auch bei Durchführung der Hebebewegung des Beins ein guter Sitz der Lastaufnahmestruktur am Knie sichergestellt. Der Filmaktor bleibt in unmittelbarer Nähe zum Körper.

Die Torso-Lastaufnahmestruktur weist vorteilhaft ein den Torso umschließendes Brustband auf, welches beidseits mit je einem Schulterband verbunden ist, welches das Schultergelenk torsoseitig radial umgibt. So wird eine zuverlässige Fixierung der Torso-Lastaufnahmestruktur zum Körper auf einfache Weise hergestellt. Ein Verrutschen wird zuverlässig verhindert. Des Weiteren wird die Anbindung an den Rückenbewegungs-Filmaktor und den Oberarmbewegungs-Filmaktor vereinfacht.

Entsprechend sind die Oberarmbewegungs-Filmaktoren zwischen den Oberarm-Lastaufnahmestrukturen und der Torso-Lastaufnahmestruktur an den Schulterbändern zumindest indirekt befestigt. Es kann somit eine geradlinige Bewegung ohne notwendige Umlenkungen durchgeführt werden. Es ist somit kein Abschnitt des Körpers vorhanden, der bei Anbindung der Filmaktoren an die Torso-Lastaufnahmestruktur die erzeugte Bewegung behindern könnte.

Des Weiteren ist es vorteilhaft, wenn an der ersten Oberarm-Lastaufnahmestruktur ein erster Unterarmbewegungs-Filmaktor zumindest indirekt befestigt ist, dessen von der ersten Oberarm-Lastaufnahmestruktur abgewandtes Ende an einer ersten Unterarm-Lastaufnahmestruktur zumindest indirekt befestigt ist und an der zweiten Oberarm-Lastaufnahmestruktur ein zweiter Unterarmbewegungs-Filmaktor zumindest indirekt befestigt ist, dessen von der zweiten Oberarm-Lastaufnahmestruktur abgewandtes Ende an einer zweiten Unterarm-Lastaufnahmestruktur zumindest indirekt befestigt ist. So kann auch der Unterarm zum Oberarm bewegt werden beziehungsweise diese Bewegung unterstützt werden.

In einer hierzu weiterführenden Ausführungsform sind die erste und zweite Oberarm-Lastaufnahmestruktur ellbogengelenknah angeordnet und die erste und zweite Unterarm-Lastaufnahmestruktur handgelenknah angeordnet, so dass die Oberarmbewegungs-Filmaktoren auf den Oberarmen aufliegen, und die Unterarmbewegungs-Filmaktoren auf den Unterarmen aufliegen. So wird der Platzbedarf reduziert und ein Klemmen an den Aktoren verhindert. Gleichzeitig wird der Hebel zur Aktuierung des jeweiligen Körperteils genutzt.

Des Weiteren ist es bevorzugt, wenn mehrere parallele Rückenbewegungs-Filmaktoren an der Torso-Lastaufnahmestruktur und der Hüft-Lastaufnahmestruktur befestigt sind, die über den Umfang der Torso-Lastaufnahmestruktur und der Hüft-Lastaufnahmestruktur verteilt angeordnet sind. Über den Umfang verteilt bedeutet nicht zwangsweise eine gleichmäßige Verteilung. Die Aktoren können beispielsweise entsprechend einer gewünschten zu aktuierenden Bewegungsrichtung verteilt werden. So könnte beispielsweise an jeder Körperseite sowie vorne und hinten jeweils ein Filmaktor zwischen den Lastaufnahmestrukturen angeordnet werden. Der Oberkörper ließe sich dann in alle Richtungen also seitwärts oder nach vorne und hinten über die Filmaktoren bewegen oder unterstützen. Selbstverständlich können auch Mischbewegungen erreicht werden. So könnte der rechte Aktor mit dem vorderen Aktor betätigt werden, was zu einer schräg nach rechts vorne weisenden Bewegung führen würde.

Ähnlich vorteilhaft können auch mehrere parallele Oberarmbewegungs-Filmaktoren an der Torso-Lastaufnahmestruktur und der Oberarm-Lastaufnahmestruktur befestigt werden, die über den Umfang des Schulterbandes und der Oberarm-Lastaufnahmestruktur verteilt angeordnet sind. So ließe sich der Oberarm allseits zum Schultergelenk, also nach vorne, hinten oder seitwärts bewegen, wenn die Filmaktoren über den gesamten Umfang verteilt werden. Es ist aber auch möglich nur mehrere Aktoren nebeneinander anzuordnen und parallel zu schalten, um eine Kraftaufteilung vorzunehmen, wobei die Kraft dann in einer ähnlichen Richtung wirkt.

Auch können mehrere parallele Oberschenkelbewegungs-Filmaktoren an der Hüft-Lastaufnahmestruktur und der Oberschenkel-Lastaufnahmestruktur befestigt sein, die über den Umfang der Hüft-Lastaufnahmestruktur und der Oberschenkel-Lastaufnahmestruktur verteilt angeordnet sind, wodurch auch hier Bewegungen in unterschiedliche Richtungen durchgeführt werden können oder die Kraft eines Aktors verstärkt werden kann.

Es wird somit eine Vorrichtung sowie ein System zur Erzeugung oder Unterstützung einer Relativbewegung zwischen über eine gelenkartige Struktur miteinander verbundenen Körperteilen zur Verfügung gestellt, welche lediglich weiche Strukturen aufweist und sich somit an den Körper anpassen lässt. Der Nutzer spürt entsprechend beinahe keine Einschränkungen in seiner üblichen Bewegung und wird dennoch voll und falls gewünscht bei Bewegung in allen Richtungen unterstützt. Eine solche Vorrichtung und eine solches System können sowohl zur Erleichterung der Arbeit aber auch zur Aktuierung gelähmter Körperteile oder von Prothesen genutzt werden. Auch ist die Nutzung als Trainingsgerät denkbar, wenn durch einen Muskel der elektrostatischen Aktuierung entgegengewirkt wird.

Mehrere Ausführungsbeispiele erfindungsgemäßer Vorrichtungen zur Erzeugung oder Unterstützung einer Relativbewegung zwischen zwei über eine gelenkartige Struktur miteinander verbundenen Körperteilen sowie erfindungsgemäßer Systeme zur Erzeugung oder Unterstützung einer Mehrzahl an Relativbewegungen zwischen über eine gelenkartige Struktur miteinander verbundenen Körperteilen mit mehreren derartigen Vorrichtungen sind in den Figuren dargestellt und werden nachfolgend beschrieben.
Figur 1 zeigt eine Prinzipskizze eines elektrostatischen Filmaktors in Seitenansicht.
Figur 2 zeigt eine erfindungsgemäße Vorrichtung zur Erzeugung oder Unterstützung einer Relativbewegung zwischen zwei über eine gelenkartige Struktur miteinander verbundenen Körperteilen.

Die Figuren 3a) bis 3f) zeigen in perspektivischer Darstellung von unterschiedlichen Seiten ein erfindungsgemäßes System zur Erzeugung oder Unterstützung einer Mehrzahl an Relativbewegungen zwischen über eine gelenkartige Struktur miteinander verbundenen Körperteilen an einem Körper.

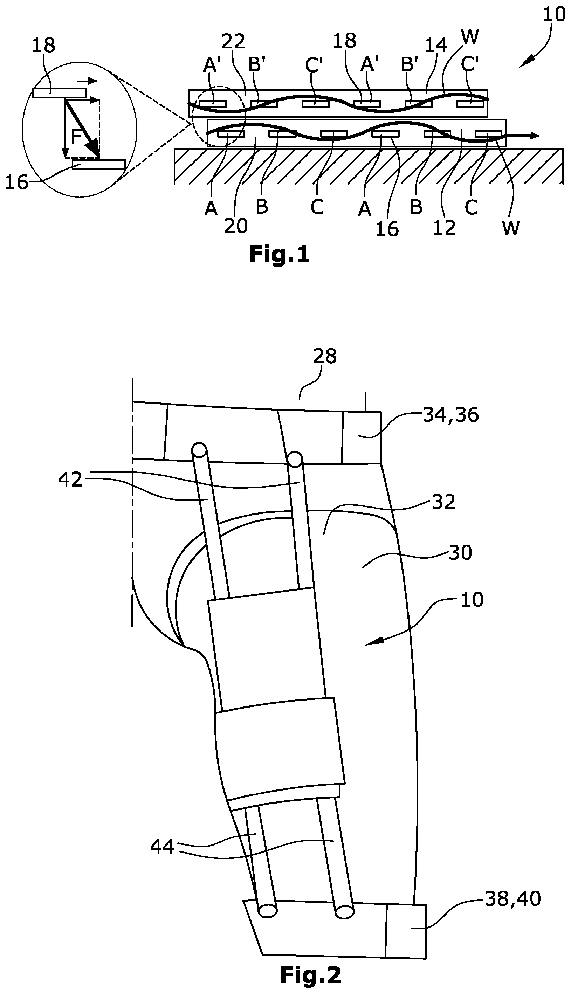

Die Figur 1 zeigt schematisch einen elektrostatischen Filmaktor 10. Dieser Filmaktor 10 besteht aus zwei vollständig flexiblen Dünnfilmschichten 12, 14, die beispielsweise aus einem Polyimid, das als Isolator dient, hergestellt werden können und in denen eine Vielzahl an Elektroden 16, 18 streifenförmig hintereinander angeordnet sind, welche phasenweise miteinander verschaltet sind. Die Schichtdicke dieser Dünnfilmschichten 12, 14 liegen im µm-Bereich.

Die erste Dünnfilmschicht 12 bildet einen Stator 20 des Filmaktors 10. Die zweite Dünnfilmschicht 14 bildet ein Gleitelement 22 des Filmaktors 10. Die ersten Elektroden 16 des Stators 20. Ein Mehrphasen-Wechselstromsignal wird mittels einer Steuerungselektronik 24 und einem Energiespeicher 26 als Spannungsquelle erzeugt und steht mit den Elektroden 16 des Stators 20 in Verbindung und den Elektroden 18 des Gleitelementes 22 in Verbindung, wodurch die Elektroden 16, 18 mit einer Mehrphasen-Wechselspannung versorgt werden. Im vorliegenden Ausführungsbeispiel werden entsprechend dreiphasige Wechselspannungen an die Elektroden 16, 18 angelegt.

Im Einzelnen werden Spannungen aufeinanderfolgend an die drei Phasen A, B, C der Elektroden 16, 18 angelegt, die jedoch phasenverschoben zueinander ausgebildet sind. Wenn diese dreiphasigen sinusförmigen Spannungen angelegt werden, entwickeln sich im Stator 20 und im Gleitelement 22 Wanderwellen W. Durch die Phasendifferenz zwischen diesen beiden Wanderwellen wird eine elektrostatische Kraft F zwischen dem Stator 20 und dem Gleitelement 22 erzeugt, wodurch das Gleitelement 22 auf dem Stator 20 entlang bewegt wird, wenn dieser festgehalten wird. Entsprechend wird ein translatorisch wirksamer Filmaktor 10 geschaffen.

In der Figur 2 ist nun ein solcher elektrostatischer Filmaktor 10 in seiner erfindungsgemäßen Verwendung als Vorrichtung zur Erzeugung oder Unterstützung einer Relativbewegung zwischen zwei miteinander verbundenen Körperteilen 28, 30, die über eine gelenkartige Struktur 32 miteinander verbunden sind, dargestellt.

Am ersten Körperteil 28 ist eine erste Lastaufnahmestruktur 34, die ein textiles Band 36 aufweist, welches das erste Körperteil 28 umgibt, befestigt. Am zweiten Körperteil 30, welches zum ersten Körperteil 28 bewegt werden soll, ist eine zweite Lastaufnahmestruktur 38 befestigt, welches ebenfalls ein textiles Band 40 aufweist, welches das zweite Körperteil 30 umfänglich umgibt.

Die erste Lastaufnahmestruktur 34, beziehungsweise dass das erste Körperteil 28 umgebende Band 36 ist über zwei Befestigungselemente 42 mit dem Stator 20 des Filmaktors 10 verbunden.

Die zweite Lastaufnahmestruktur 38 beziehungsweise das das zweite Körperteil 30 umgebende Band 40 ist ebenfalls über zwei solche Befestigungselemente 44 mit dem Gleitelement 22 des Filmaktors 10 verbunden. Die Befestigungselemente 42, 44 sind jeweils beidseits des Filmaktors 10 am Stator 20 und am Gleitelement 22 befestigt und weisen eine Länge auf, die so gewählt ist, dass im nicht betätigten Zustand des Filmaktors 10 die Befestigungselemente 44 zwischen den Bändern 36, 40 und dem Stator 20 beziehungsweise dem Gleitelement 22 gespannt sind. Der Filmaktor 10 liegt entsprechend in diesem Zustand flächig auf dem zweiten, zu bewegenden Körperteil 30 auf.

Durch Betätigen des Filmaktors 10 in der vorbeschriebenen Weise wird das Gleitelement 22 auf dem Stator 20 verschoben. Somit findet eine zwangsweise Verkürzung des Abstandes zwischen den beiden Lastaufnahmestrukturen 34, 38 statt, die dazu führt, dass über die Lastaufnahmestrukturen 34, 38 eine Kraft auf die zueinander bewegbaren Körperteile 28, 30 ausgeübt wird, die eine Bewegung des zweiten Körperteils 30 relativ zum ersten Körperteil 28 bewirkt, so dass ein Schwenken des zweiten Körperteils 30 um die gelenkartige Struktur 32 zum ersten Körperteil 28 hin erfolgt und somit in eine Position, in der die beiden Lastaufnahmestrukturen 34, 38 einen entsprechend geringeren Abstand zueinander aufweisen.

Das erste Band 36 ist dabei möglichst nah an der gelenkartigen Struktur 32 angeordnet, während das zweite Band 40 am zweiten Körperteil 30 einen möglichst großen Abstand aufweist, wodurch sichergestellt wird, dass während der gesamten Bewegung der Filmaktor 10 zwischen dem zweiten Band 40 und der gelenkartigen Struktur 32 angeordnet ist, und somit nicht in den sich mit der weiterführenden Bewegung sich weiter einengenden Bereich in unmittelbarer Nähe zur gelenkartigen Struktur 32 gelangt. Stattdessen bleibt der Stator 20 in unmittelbarer Nähe zum zweiten Körperteil 30 beziehungsweise kann an diesem aufliegen.

Je nachdem an welchem Ort der Stator 20 beziehungsweise das Gleitelement 22 an den Lastaufnahmestrukturen 34, 38 angebracht wird, kann auch der Ort der Einbringung der Kraft und damit die Richtung des wirkenden Drehmomentes geändert werden, so dass bei Gelenkstrukturen 32 ohne feste Drehachse je nach Anbringen des Filmaktors 10 an den Lastaufnahmestrukturen 34, 38 auch unterschiedliche Bewegungsrichtungen erzeugt werden können.

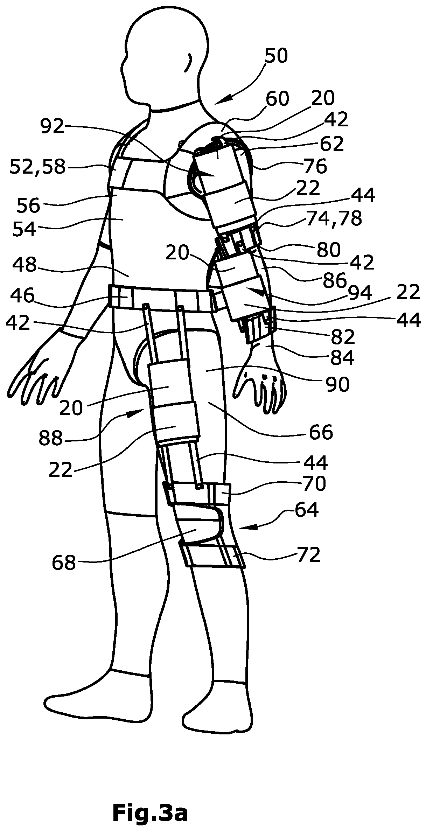

In den Figuren 3a) bis 3f) ist ein System dargestellt, welches aus einer Mehrzahl solcher erfindungsgemäßer Vorrichtungen aufgebaut ist.

Das System besteht aus einer Hüft-Lastaufnahmestruktur 46, welcher an der Hüfte beziehungsweise Taille 48 des Trägers 50 befestigt wird, einer Torso-Lastaufnahmestruktur 52, die an einem Torso 54 im Bereich einer Brust 56 befestigt ist und aus einem Brustband 58, welches die Brust 56 des Trägers 50 umgibt und daran befestigten Schulterbändern 60 besteht, welche torsoseitig Schultergelenke 62 des Trägers 50 umgeben.

Des Weiteren weist dieses System zwei Oberschenkel-Lastaufnahmestrukturen 64 auf, von denen in den Figuren 3a) bis f) zur besseren Übersicht lediglich eine dargestellt ist, wobei die zweite Oberschenkel-Lastaufnahmestruktur 64 symmetrisch zur ersten am anderen Oberschenkel 66 beziehungsweise Knie 68 anzuordnen ist. Diese besteht aus einem ersten Band 70, welches oberhalb eines Knies 68 des Trägers 50 am Oberschenkel 66 angeordnet ist und einem zweiten Band 72, das zur besseren Stabilität dient und unterhalb des Knies 68 am Unterschenkel 69 angeordnet ist, wobei die beiden Bänder 70, 72 an der Rückseite, wie bei einer Kniebandage, miteinander verbunden sind.

Zusätzlich besteht das System aus zwei Oberarm-Lastaufnahmestrukturen 74, von denen ebenfalls in den Figuren zur besseren Übersicht lediglich eine dargestellt ist und die zweite Oberarm-Lastaufnahmestruktur 74 symmetrisch am anderen Oberarm 76 anzuordnen ist. Diese weist ein Band 78 auf, welches oberhalb eines Ellbogengelenkes 80 des Trägers 50 am Oberarm 76 angeordnet ist.

Zwei weitere Unterarm-Lastaufnahmestrukturen 82, sind in der Nähe zu den Handgelenk 84 an den beiden Unterarmen 86 befestigt.

In der Figur 3a) ist nun zu erkennen, dass ein elektrostatischer Oberschenkelbewegungs-Filmaktor 88 über jeweils zwei Befestigungselemente 42, 44 mit der Hüft-Lastaufnahmestruktur 46 und der Oberschenkel-Lastaufnahmestruktur 64 verbunden ist, wobei die Hüft-Lastaufnahmestruktur 46 die Verbindung zum Stator 20 aufweist und die Oberschenkel-Lastaufnahmestruktur 64 die Verbindung zum Gleitelement 22 des Oberschenkelbewegungs-Filmaktors 88 aufweist.

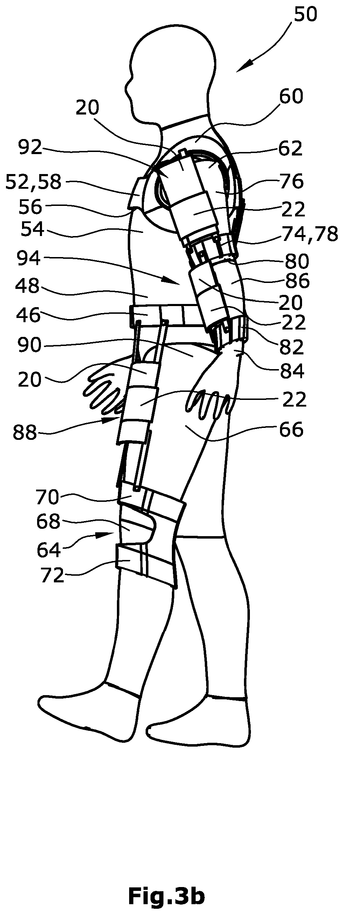

Bei Bestromung des Oberschenkelbewegungs-Filmaktors 88 wird das Gleitelement 22 auf dem Stator 20 verschoben, wie in Figur 3b) im Vergleich zu Figur 3a) zu erkennen ist. Entsprechend wird der Oberschenkel 66 um ein Hüftgelenk 90 nach oben gedreht, da der Abstand zwischen den Lastaufnahmestrukturen 46, 64 verkürzt wird. Entsprechend kann ein Schritt erzeugt werden.

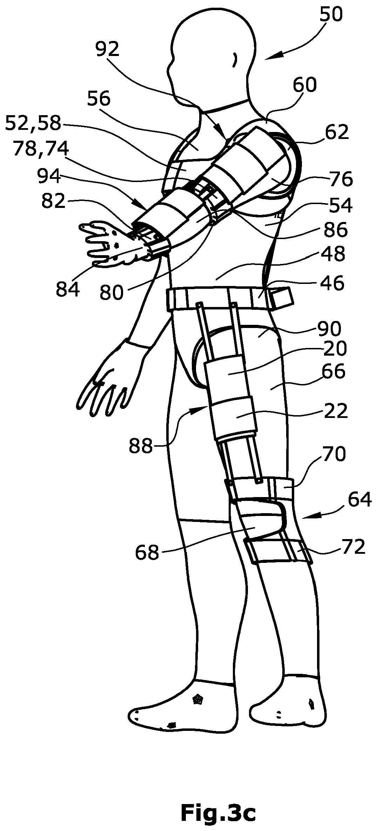

Zwischen dem Schulterband 60, der Torso-Lastaufnahmestruktur 52 und der Oberarm-Lastaufnahmestruktur 74 ist ein elektrostatischer Oberarmbewegungs-Filmaktor 92 angeordnet, dessen Stator 20 über die Befestigungsstrukturen 42 mit dem Schulterband 60 der Torso-Lastaufnahmestruktur 52 verbunden ist und dessen Gleitelement 22 über die Befestigungsstrukturen 44 mit der Oberarm-Lastaufnahmestruktur 74 verbunden ist. Bei entsprechender Ansteuerung des Oberarmbewegungs-Filmaktors 92 wandert erneut das Gleitelement 22 auf dem Stator 20, wie in Figur 3c) zu erkennen ist und verkürzt so den Abstand zwischen den Verbindungspunkten der beiden verbundenen Lastaufnahmestrukturen 52, 74, wodurch der Oberarm 76 um das Schultergelenk 62 gedreht wird und somit der Oberarm 76 angehoben wird.

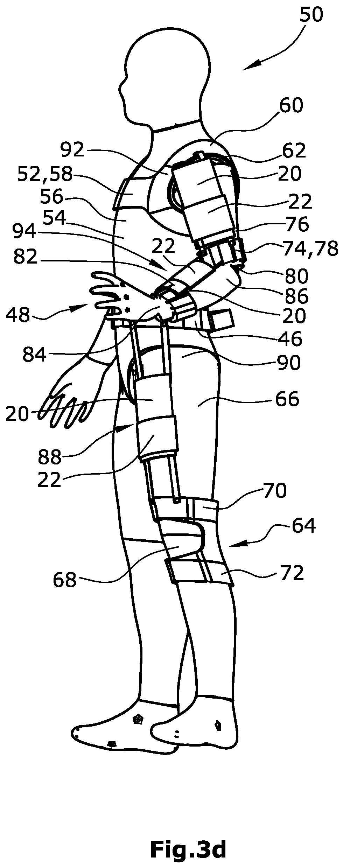

In der Figur 3d) ist die entsprechende Bewegung des Unterarms 86, also dessen Drehung um das Ellbogengelenk 80 zu erkennen, welche dadurch entsteht, dass ein elektrostatischer Unterarmbewegungs-Filmaktor 94 zwischen die Oberarm-Lastaufnahmestruktur 74 und die Unterarm-Lastaufnahmestruktur 82 gespannt ist. Auch hier ist der Stator 20 an der näher zum Ellbogengelenk 80 angeordneten Oberarm-Lastaufnahmestruktur 74 befestigt, wie auch bei den anderen Filmaktoren 88, 92, 94 jeweils der Stator 20 an den Lastaufnahmestrukturen befestigt ist, die näher zu den gelenkartigen Strukturen 62, 80, 90 platziert sind. Des Weiteren ist zu erkennen, dass die Filmaktoren 88, 92, 94 jeweils an der Seite des Körperteils angeordnet sind zu der das Körperteil bewegt werden soll. Es werden somit immer Zugkräfte übertragen.

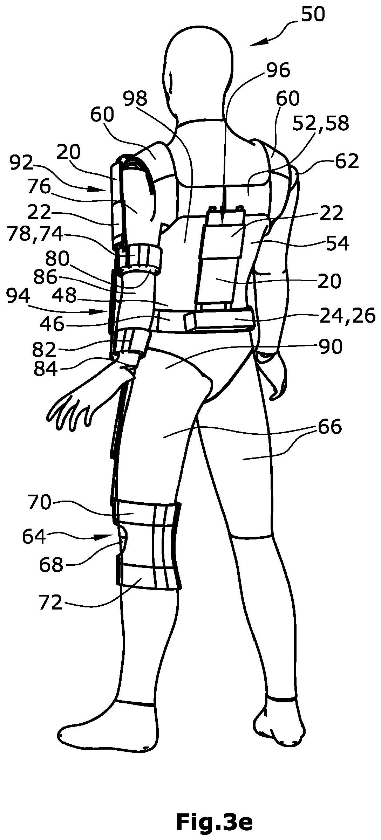

In der Figur 3e) ist ergänzend noch ein Rückenbewegungs-Filmaktor 96 zu erkennen, der an einem Rücken 98 des Trägers 50 angeordnet ist und dessen Stator 20 am Brustband 58 der Torso-Lastaufnahmestruktur 52 befestigt ist und dessen Gleitelement 22 an der Hüft-Lastaufnahmestruktur 46 befestigt ist. Dieser Rückenbewegungs-Filmaktor 96 dient vor allem zur Unterstützung oder Durchführung von Hubbewegungen und somit zur Streckung des Rückens aus der gebückten Haltung. Aus diesem Grund befindet sich in der Figur 3e) das Gleitelement 22 auch in seiner angezogenen oberen Position. Des Weiteren ist an der Hüft-Lastaufnahmestruktur 46 der Energiespeicher 26 und die Steuerungselektronik 24 befestigt.

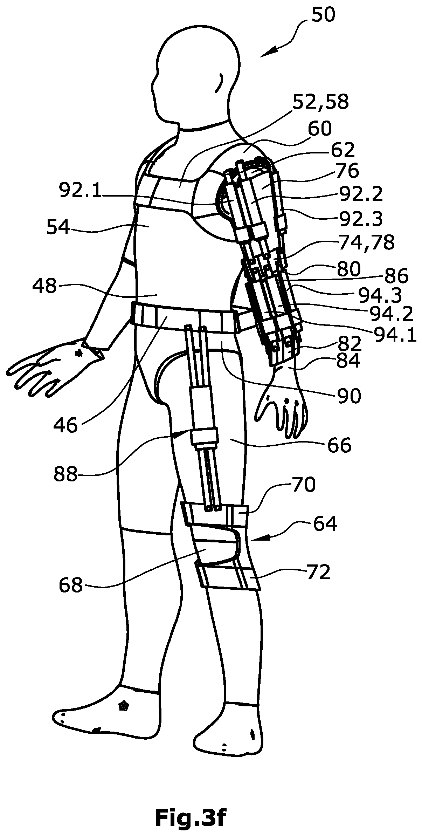

Eine weitere erfindungsgemäße Ausbildung des Systems ist in der Figur 3f) dargestellt. Hier sind die einzelnen großen elektrostatischen Oberarmbewegungs-Filmaktoren 92 und Unterarmbewegungs-Filmaktoren 94 durch mehrere kleine Oberarmbewegungs-Filmaktoren 92 und Unterarmbewegungs-Filmaktoren 94 ersetzt. Dies kann entweder lediglich zur Aufteilung der aufzubringenden Kraft auf mehrere Filmaktoren 92, 94 dienen oder die Filmaktoren 92, 94 sind alle einzeln ansteuerbar, so dass komplexe Bewegungen dargestellt werden können. Hierzu sind die Filmaktoren 92, 94 über den Umfang der Lastaufnahmestrukturen 52, 74, 82 derart zu verteilen, dass sie bei Bestromung in unterschiedliche Richtungen wirken. So kann beispielsweise der Oberarm 76 um das Schultergelenk 62 entweder nach vorne nach hinten oder seitwärts gehoben werden. Dies kann durch einen vorderen Oberarmbewegungs-Filmaktor 92.1, einen seitlichen Oberarmbewegungs-Filmaktor 92.2 und einen hinteren Oberarmbewegungs-Filmaktor 92.3 realisiert werden. Zusätzliche Filmaktoren sind selbstverständlich ebenfalls denkbar.

Mit den dargestellten Vorrichtungen und Systemen zur Erzeugung oder Unterstützung einer Relativbewegung zwischen zwei miteinander verbundenen Körperteilen, die über eine gelenkartige Struktur miteinander verbunden sind, ist es entsprechend möglich, auf einfache Weise eine genau regelbare Bewegung zu erzeugen oder zumindest zu unterstützen. Dabei sind die verwendeten Aktoren und Befestigungsstrukturen flexibel und weisen somit einen hohen Tragekomfort auf, der den Träger nur sehr gering einschränkt. Durch die Verwendung vieler kleinerer Aktoren kann zusätzlich eine sehr hohe Flexibilität bezüglich der Bewegungen erreicht werden, so dass ein natürlicher Bewegungsablauf unterstützt oder nachgestellt werden kann.

Es sollte deutlich sein, dass die Erfindung nicht auf die beschriebenen Ausführungsbeispiele beschränkt ist. Selbstverständlich kann das System auch noch mehr Aktoren, beispielsweise am Unterschenkel oder den Füßen aber auch an den Händen oder dem Bauch aufweisen. Auch können im Vergleich zum beschriebenen Ausführungsbeispiel Aktoren und Lastaufnahmestrukturen entfallen. Die Lastaufnahmestrukturen können auch aus anderen Materialien hergestellt werden und andere Formen aufweisen. Hierbei ist lediglich entscheidend, dass vom Filmaktor die Kraft auf das jeweilige Körperteil übertragen werden kann. Prinzipiell denkbar sind auch Kraftübertragungswege über Bowdenzüge oder ähnliches. Des Weiteren sei darauf hingewiesen, dass die Filmaktoren auch mehrere Statorschichten und Gleitelementschichten aufweisen können, die parallel zueinander geschaltet sind, wodurch die elektrostatische Kraft vergrößert werden kann. Auch können diverse andere Körperteile über mehrere Filmaktoren angesteuert werden. Dies ist insbesondere an allen Gelenken sinnvoll, welche verschiedene Bewegungsrichtungen zulassen, wie der Rücken, das Schultergelenk, das Kopfgelenk, das Hüftgelenk oder der Ellbogen. Der Energiespeicher kann, je nach Ausführung der Vorrichtung beziehungswiese des Systems selbstverständlich auch an anderen Positionen der Struktur angebracht werden. Auch wird darauf hingewiesen, dass die zu erzeugenden Bewegungen immer beidseitig erzeugt werden können, also die Aktoren sowohl als Agonist als auch als Antagonist wirken können.

## Patentansprüche

1. Vorrichtung zur Erzeugung oder Unterstützung einer Relativbewegung zwischen zwei über eine gelenkartige Struktur (32) miteinander verbundenen Körperteilen (28, 30), mit
einer ersten Lastaufnahmestruktur (34), welche an einem ersten Körperteil (28) befestigt ist,
einer zweiten Lastaufnahmestruktur (38), welche an einem zweiten Körperteil (30) befestigt ist, welches relativ zum ersten Körperteil (28) schwenkbar ist,
einem Aktor (10), über den die erste Lastaufnahmestruktur (34) mit der zweiten Lastaufnahmestruktur (38) verbunden ist,
**dadurch gekennzeichnet, dass**
der Aktor (10) ein elektrostatischer, linearer Filmaktor ist.

2. Vorrichtung zur Erzeugung oder Unterstützung einer Relativbewegung zwischen zwei über eine gelenkartige Struktur miteinander verbundenen Körperteilen nach Anspruch 1,
**dadurch gekennzeichnet, dass**
der elektrostatische Filmaktor (10) einen Stator (20) aufweist, der mit einer der beiden Lastaufnahmestrukturen (34, 38) zumindest indirekt verbunden ist und der Filmaktor (10) ein Gleitelement (22) aufweist, welches mit dem anderen der beiden Lastaufnahmestrukturen (34, 38) zumindest indirekt verbunden ist.

3. Vorrichtung zur Erzeugung oder Unterstützung einer Relativbewegung zwischen zwei über eine gelenkartige Struktur miteinander verbundenen Körperteilen nach Anspruch 2,
**dadurch gekennzeichnet, dass**
im Stator (20) des elektrostatischen Filmaktors (10) erste Elektroden (16) ausgebildet sind und im Gleitelement (22) des Filmaktors (10) zweite Elektroden (18) ausgebildet sind, wobei die ersten Elektroden (16) und die zweiten Elektroden (18) mit unterschiedlichen Mehrphasenwechselspannungen aus einer Steuerungselektronik (24), die mit einem Energiespeicher (26) verbunden ist, beaufschlagbar sind.

4. Vorrichtung zur Erzeugung oder Unterstützung einer Relativbewegung zwischen zwei über eine gelenkartige Struktur miteinander verbundenen Körperteilen nach einem der vorhergehenden Ansprüche,
**dadurch gekennzeichnet, dass**
die erste Lastaufnahmestruktur (34) am nicht zu bewegenden ersten Körperteil (28) angeordnet ist und die zweite Lastaufnahmestruktur (38) am relativ zum ersten Körperteil (28) zu bewegenden zweiten Körperteil (30) angeordnet ist, wobei ein Abstand der einen Lastaufnahmestruktur (34; 38) zu einer gelenkartigen Struktur (32) zwischen den beiden Körperteilen (28, 30) kleiner ist als der Abstand der jeweils anderen Lastaufnahmestruktur (38; 34) zur gelenkartigen Struktur (32) zwischen den beiden Körperteilen (28, 30).

5. Vorrichtung zur Erzeugung oder Unterstützung einer Relativbewegung zwischen zwei über eine gelenkartige Struktur miteinander verbundenen Körperteilen nach einem der Ansprüche 2 bis 4,
**dadurch gekennzeichnet, dass**
das Gleitelement (22) des elektrostatischen Filmaktors (10) mit der zweiten Lastaufnahmestruktur (38) zumindest indirekt verbunden ist und der Stator (20) des elektrostatischen Filmaktors (10) mit der ersten Lastaufnahmestruktur (34) zumindest indirekt verbunden ist.

6. Vorrichtung zur Erzeugung oder Unterstützung einer Relativbewegung zwischen zwei über eine gelenkartige Struktur miteinander verbundenen Körperteilen nach einem der Ansprüche 2 bis 5,
**dadurch gekennzeichnet, dass**
der Stator (20) und das Gleitelement (22) zwischen der gelenkartigen Struktur (32) und einer der Lastaufnahmestrukturen (34; 38) angeordnet sind.

7. Vorrichtung zur Erzeugung oder Unterstützung einer Relativbewegung zwischen zwei über eine gelenkartige Struktur miteinander verbundenen Körperteilen nach Anspruch 6,
**dadurch gekennzeichnet, dass**
der Stator (20) des elektrostatischen Filmaktors (10) vollständig auf dem ersten oder dem zweiten Körperteil (28, 30) aufliegt.

8. Vorrichtung zur Erzeugung oder Unterstützung einer Relativbewegung zwischen zwei über eine gelenkartige Struktur miteinander verbundenen Körperteilen nach einem der vorhergehenden Ansprüche 2 bis 7,
**dadurch gekennzeichnet, dass**
der Stator (20) des elektrostatischen Filmaktors (10) an der Seite des Körperteils (28, 30) aufliegt, zu der eine Bewegung des zweiten Körperteils (30) erfolgt.

9. Vorrichtung zur Erzeugung oder Unterstützung einer Relativbewegung zwischen zwei über eine gelenkartige Struktur miteinander verbundenen Körperteilen nach einem der vorhergehenden Ansprüche,
**dadurch gekennzeichnet, dass**
die Lastaufnahmestrukturen (34, 38) flexibel und einstellbar sind.

10. Vorrichtung zur Erzeugung oder Unterstützung einer Relativbewegung zwischen zwei über eine gelenkartige Struktur miteinander verbundenen Körperteilen nach einem der vorhergehenden Ansprüche,
**dadurch gekennzeichnet, dass**
die Lastaufnahmestrukturen (34, 38) textile Bänder (36, 40) aufweisen.

11. Vorrichtung zur Erzeugung oder Unterstützung einer Relativbewegung zwischen zwei über eine gelenkartige Struktur miteinander verbundenen Körperteilen nach einem der vorhergehenden Ansprüche,
**dadurch gekennzeichnet, dass**
mehrere elektrostatische, lineare Filmaktoren (10) mit den beiden Lastaufnahmestrukturen (34, 38) verbunden sind.

12. System zur Erzeugung oder Unterstützung einer Mehrzahl an Relativbewegungen zwischen über eine gelenkartige Struktur miteinander verbundenen Körperteilen mit mehreren Vorrichtungen nach einem der vorhergehenden Ansprüche,
**dadurch gekennzeichnet, dass**
eine Hüft-Lastaufnahmestruktur (46) an der Taille oder Hüfte (48) angeordnet ist, an der zwei elektrostatische Oberschenkelbewegungs-Filmaktoren (88) befestigt sind, von denen ein erster Oberschenkelbewegungs-Filmaktor (88) mit seinem von der Hüft-Lastaufnahmestruktur (46) abgewandten Ende an einer ersten Oberschenkel-Lastaufnahmestruktur (64) am ersten Oberschenkel (66) befestigt ist, und ein zweiter Oberschenkelbewegungs-Filmaktor (88) mit seinem von der Hüft-Lastaufnahmestruktur (46) abgewandten Ende an einer zweiten Oberschenkel-Lastaufnahmestruktur (64) am zweiten Oberschenkel (66) befestigt ist.

13. System zur Erzeugung oder Unterstützung einer Mehrzahl an Relativbewegungen zwischen über eine gelenkartige Struktur miteinander verbundenen Körperteilen mit mehreren Vorrichtungen nach einem der vorhergehenden Ansprüche,
**dadurch gekennzeichnet, dass**
eine Torso-Lastaufnahmestruktur (52) in Brusthöhe am Torso (54) befestigt ist, an der zwei elektrostatische Oberarmbewegungs-Filmaktoren (92) befestigt sind, von denen ein erster Oberarmbewegungs-Filmaktor (92) mit seinem von der Torso-Lastaufnahmestruktur (52) abgewandten Ende an einer ersten Oberarm-Lastaufnahmestruktur (74) am ersten Oberarm (76) befestigt ist, und ein zweiter Oberarmbewegungs-Filmaktor (92) mit seinem von der Torso-Lastaufnahmestruktur (52) abgewandten Ende an einer zweiten Oberarm-Lastaufnahmestruktur (74) am zweiten Oberarm (76) befestigt ist.

14. System zur Erzeugung oder Unterstützung einer Mehrzahl an Relativbewegungen zwischen über eine gelenkartige Struktur miteinander verbundenen Körperteilen nach Anspruch 12 und 13,
**dadurch gekennzeichnet, dass**
die Torso-Lastaufnahmestruktur (52) über einen Rückenbewegungs-Filmaktor (96) mit der Hüft-Lastaufnahmestruktur (46) verbunden ist.

15. System zur Erzeugung oder Unterstützung einer Mehrzahl an Relativbewegungen zwischen über eine gelenkartige Struktur miteinander verbundenen Körperteilen nach einem der Ansprüche 12 bis 14,
**dadurch gekennzeichnet, dass**
an der Hüft-Lastaufnahmestruktur (46) ein Energiespeicher (26) und eine Steuerungselektronik (24) ausgebildet sind.

## Claims

1. Device for generating or supporting a relative movement between two body parts (28, 30) connected to one another via a joint-like structure (32), having
a first load-receiving structure (34) which is fastened to a first body part (28),
a second load-receiving structure (38) which is fastened to a second body part (30) which is pivotable relative to the first body part (28),
an actuator (10) via which the first load-receiving structure (34) is connected to the second load-receiving structure (38),
**characterized in that**
the actuator (10) is an electrostatic linear film actuator.

2. Device for generating or supporting a relative movement between two body parts connected to one another via a joint-like structure according to claim 1,
**characterized in that**
the electrostatic film actuator (10) has a stator (20) which is at least indirectly connected to one of the two load-receiving structures (34, 38), and the film actuator (10) has a sliding element (22) which is at least indirectly connected to the other of the two load-receiving structures (34, 38).

3. Device for generating or supporting a relative movement between two body parts connected to one another via a joint-like structure according to claim 2,
**characterized in that**
first electrodes (16) are defined in the stator (20) of the electrostatic film actuator (10), and second electrodes (18) are defined in the sliding element (22) of the film actuator (10), wherein the first electrodes (16) and the second electrodes (18) can be supplied with different polyphase AC voltages from a control electronics (24) which is connected to an energy store (26).

4. Device for generating or supporting a relative movement between two body parts connected to one another via a joint-like structure according to one of the preceding claims,
**characterized in that**
the first load-receiving structure (34) is arranged on the first body part (28) which is not to be moved, and the second load-receiving structure (38) is arranged on the second body part (30) which is to be moved relative to the first body part (28), wherein a distance of the one load-receiving structure (34; 38) from a joint-like structure (32) between the two body parts (28, 30) is smaller than the distance of the respective other load-receiving structure (38; 34) from the joint-like structure (32) between the two body parts (28, 30).

5. Device for generating or supporting a relative movement between two body parts connected to one another via a joint-like structure according to one of claims 2 to 4,
**characterized in that**
the sliding element (22) of the electrostatic film actuator (10) is at least indirectly connected to the second load-receiving structure (38), and the stator (20) of the electrostatic film actuator (10) is at least indirectly connected to the first load-receiving structure (34).

6. Device for generating or supporting a relative movement between two body parts connected to one another via a joint-like structure according to one of claims 2 to 5,
**characterized in that**
the stator (20) and the sliding element (22) are arranged between the joint-like structure (32) and one of the load-receiving structures (34; 38).

7. Device for generating or supporting a relative movement between two body parts connected to one another via a joint-like structure according to claim 6,
**characterized in that**
the stator (20) of the electrostatic film actuator (10) rests completely on the first or the second body part (28, 30).

8. Device for generating or supporting a relative movement between two body parts connected to one another via a joint-like structure according to one of the preceding claims 2 to 7,
**characterized in that**
the stator (20) of the electrostatic film actuator (10) rests on that side of the body part (28, 30) with respect to which a movement of the second body part (30) takes place.

9. Device for generating or supporting a relative movement between two body parts connected to one another via a joint-like structure according to one of the preceding claims,
**characterized in that**
the load-receiving structures (34, 38) are flexible and adjustable.

10. Device for generating or supporting a relative movement between two body parts connected to one another via a joint-like structure according to one of the preceding claims,
**characterized in that**
the load-receiving structures (34, 38) have textile bands (36, 40).

11. Device for generating or supporting a relative movement between two body parts connected to one another via a joint-like structure according to one of the preceding claims,
**characterized in that**
a plurality of electrostatic linear film actuators (10) are connected to the two load-receiving structures (34, 38).

12. System for generating or supporting a plurality of relative movements between body parts connected to one another via a joint-like structure having a plurality of devices according to one of the preceding claims,
**characterized in that**
a hip load-receiving structure (46) is arranged on the waist or hip (48), to which hip load-receiving structure (46) two electrostatic thigh movement film actuators (88) are fastened, of which a first thigh movement film actuator (88) is fastened by way of its end which faces away from the hip load-receiving structure (46) to a first thigh load-receiving structure (64) on the first thigh (66), and a second thigh movement film actuator (88) is fastened by way of its end which faces away from the hip load-receiving structure (46) to a second thigh load-receiving structure (64) on the second thigh (66).

13. System for generating or supporting a plurality of relative movements between body parts connected to one another via a joint-like structure having a plurality of devices according to one of the preceding claims,
**characterized in that**
a torso load-receiving structure (52) is fastened at chest level to the torso (54), to which torso load-receiving structure (52) two electrostatic upper-arm movement film actuators (92) are fastened, of which a first upper-arm movement film actuator (92) is fastened by way of its end which faces away from the torso load-receiving structure (52) to a first upper-arm load-receiving structure (74) on the first upper arm (76), and a second upper-arm movement film actuator (92) is fastened by way of its end which faces away from the torso load-receiving structure (52) to a second upper-arm load-receiving structure (74) on the second upper arm (76).

14. System for generating or supporting a plurality of relative movements between body parts connected to one another via a joint-like structure according to claim 12 and 13,
**characterized in that**
the torso load-receiving structure (52) is connected to the hip load-receiving structure (46) via a back movement film actuator (96).

15. System for generating or supporting a plurality of relative movements between body parts connected to one another via a joint-like structure according to one of claims 12 to 14,
**characterized in that**
an energy store (26) and a control electronics (24) are defined on the hip load-receiving structure (46).

## Revendications

1. Dispositif pour générer ou assister un mouvement relatif entre deux parties de corps (28, 30) reliées l'une à l'autre par le biais d'une structure de type articulation (32), comprenant
une première structure de réception de charge (34) qui est fixée à une première partie de corps (28),
une deuxième structure de réception de charge (38) qui est fixée à une deuxième partie de corps (30) qui peut pivoter par rapport à la première partie de corps (28),
un actionneur (10) par le biais duquel la première structure de réception de charge (34) est reliée à la deuxième structure de réception de charge (38),
**caractérisé en ce que**
l'actionneur (10) est un actionneur à film linéaire électrostatique.

2. Dispositif pour générer ou assister un mouvement relatif entre deux parties de corps reliées l'une à l'autre par le biais d'une structure de type articulation selon la revendication 1,
**caractérisé en ce que**
l'actionneur à film électrostatique (10) présente un stator (20) qui est relié au moins indirectement à l'une des deux structures de réception de charge (34, 38) et l'actionneur à film (10) présente un élément coulissant (22) qui est relié au moins indirectement à l'autre des deux structures de réception de charge (34, 38).

3. Dispositif pour générer ou assister un mouvement relatif entre deux parties de corps reliées l'une à l'autre par le biais d'une structure de type articulation selon la revendication 2,
**caractérisé en ce que**
des premières électrodes (16) sont réalisées dans le stator (20) de l'actionneur à film électrostatique (10) et des deuxièmes électrodes (18) sont réalisées dans l'élément coulissant (22) de l'actionneur à film (10), les premières électrodes (16) et les deuxièmes électrodes (18) pouvant être sollicitées par des tensions alternatives polyphasées différentes provenant d'une électronique de commande (24) qui est reliée à un accumulateur d'énergie (26).

4. Dispositif pour générer ou assister un mouvement relatif entre deux parties de corps reliées l'une à l'autre par le biais d'une structure de type articulation selon l'une quelconque des revendications précédentes,
**caractérisé en ce que**
la première structure de réception de charge (34) est disposée au niveau de la première partie de corps (28) à ne pas déplacer et la deuxième structure de réception de charge (38) est disposée au niveau de la deuxième partie de corps (30) à déplacer par rapport à la première partie de corps (28), une distance de l'une des structures de réception de charge (34 ; 38) par rapport à une structure de type articulation (32) entre les deux parties de corps (28, 30) étant inférieure à la distance de l'autre structure de réception de charge (38 ; 34) respective par rapport à la structure de type articulation (32) entre les deux parties de corps (28, 30).

5. Dispositif pour générer ou assister un mouvement relatif entre deux parties de corps reliées l'une à l'autre par le biais d'une structure de type articulation selon l'une quelconque des revendications 2 à 4,
**caractérisé en ce que**
l'élément coulissant (22) de l'actionneur à film électrostatique (10) est relié au moins indirectement à la deuxième structure de réception de charge (38) et le stator (20) de l'actionneur à film électrostatique (10) est relié au moins indirectement à la première structure de réception de charge (34).

6. Dispositif pour générer ou assister un mouvement relatif entre deux parties de corps reliées l'une à l'autre par le biais d'une structure de type articulation selon l'une quelconque des revendications 2 à 5,
**caractérisé en ce que**
le stator (20) et l'élément coulissant (22) sont disposés entre la structure de type articulation (32) et l'une des structures de réception de charge (34 ; 38).

7. Dispositif pour générer ou assister un mouvement relatif entre deux parties de corps reliées l'une à l'autre par le biais d'une structure de type articulation selon la revendication 6,
**caractérisé en ce que**
le stator (20) de l'actionneur à film électrostatique (10) repose complètement sur la première ou la deuxième partie de corps (28, 30).

8. Dispositif pour générer ou assister un mouvement relatif entre deux parties de corps reliées l'une à l'autre par le biais d'une structure de type articulation selon l'une quelconque des revendications précédentes 2 à 7,
**caractérisé en ce que**
le stator (20) de l'actionneur à film électrostatique (10) repose sur le côté de la partie de corps (28, 30) vers lequel un mouvement de la deuxième partie de corps (30) a lieu.

9. Dispositif pour générer ou assister un mouvement relatif entre deux parties de corps reliées l'une à l'autre par le biais d'une structure de type articulation selon l'une quelconque des revendications précédentes,
**caractérisé en ce que**
les structures de réception de charge (34, 38) sont flexibles et réglables.

10. Dispositif pour générer ou assister un mouvement relatif entre deux parties de corps reliées l'une à l'autre par le biais d'une structure de type articulation selon l'une quelconque des revendications précédentes,
**caractérisé en ce que**
les structures de réception de charge (34, 38) présentent des bandes textiles (36, 40).

11. Dispositif pour générer ou assister un mouvement relatif entre deux parties de corps reliées l'une à l'autre par le biais d'une structure de type articulation selon l'une quelconque des revendications précédentes,
**caractérisé en ce que**
plusieurs actionneurs à film linéaires électrostatiques (10) sont reliés aux deux structures de réception de charge (34, 38).

12. Système pour générer ou assister une pluralité de mouvements relatifs entre des parties de corps reliées l'une à l'autre par le biais d'une structure de type articulation avec plusieurs dispositifs selon l'une quelconque des revendications précédentes,
**caractérisé en ce que**
une structure de réception de charge de hanche (46) est disposée au niveau de la taille ou de la hanche (48), au niveau de laquelle sont fixés deux actionneurs à film de mouvement de cuisse électrostatiques (88), dont un premier actionneur à film de mouvement de cuisse (88) est fixé par son extrémité opposée à la structure de réception de charge de hanche (46) au niveau d'une première structure de réception de charge de cuisse (64) au niveau de la première cuisse (66), et un deuxième actionneur à film de mouvement de cuisse (88) est fixé par son extrémité opposée à la structure de réception de charge de hanche (46) au niveau d'une deuxième structure de réception de charge de cuisse (64) au niveau de la deuxième cuisse (66).

13. Système pour générer ou assister une pluralité de mouvements relatifs entre des parties de corps reliées l'une à l'autre par le biais d'une structure de type articulation avec plusieurs dispositifs selon l'une quelconque des revendications précédentes,
**caractérisé en ce que**
une structure de réception de charge de torse (52) est fixée au niveau de la poitrine au niveau du torse (54), au niveau de laquelle sont fixés deux actionneurs à film de mouvement de bras supérieur électrostatiques (92), dont un premier actionneur à film de mouvement de bras supérieur (92) est fixé par son extrémité opposée à la structure de réception de charge de torse (52) au niveau d'une première structure de réception de charge de bras supérieur (74) au niveau du premier bras supérieur (76), et un deuxième actionneur à film de mouvement de bras supérieur (92) est fixé par son extrémité opposée à la structure de réception de charge de torse (52) au niveau d'une deuxième structure de réception de charge de bras supérieur (74) au niveau du deuxième bras supérieur (76).

14. Système pour générer ou assister une pluralité de mouvements relatifs entre des parties de corps reliées l'une à l'autre par le biais d'une structure de type articulation selon les revendications 12 et 13,
**caractérisé en ce que**
la structure de réception de charge de torse (52) est reliée par le biais d'un actionneur à film de mouvement de dos (96) à la structure de réception de charge de hanche (46).

15. Système pour générer ou assister une pluralité de mouvements relatifs entre des parties de corps reliées l'une à l'autre par le biais d'une structure de type articulation selon l'une quelconque des revendications 12 à 14,
**caractérisé en ce que**
un accumulateur d'énergie (26) et une électronique de commande (24) sont réalisés au niveau de la structure de réception de charge de hanche (46).
